**Europäisches Patentamt**

**European Patent Office**

**Office européen des brevets**

(19)

(11) Numéro de publication: **0 022 699**
**A1**

(12)

# DEMANDE DE BREVET EUROPEEN

(21) Numéro de dépôt: 80400960.3

(51) Int. Cl.³: **H 05 B 41/29**

(22) Date de dépôt: 26.06.80

(30) Priorité: 29.06.79 FR 7916911
19.07.79 FR 7918661
20.06.80 FR 8013774

(71) Demandeur: **MERE, MALLERAY ET CIE, B.P.9, Les Berruries F-37390 Mettray (FR)**

(72) Inventeur: **Courier de Mere, Henri, 5, rue de l'Assomption, F-75016 Paris (FR)**
Inventeur: **de Malleray, Jean Marie, 93, Avenue Jean-Baptiste Clement, F-92100 Boulogne (FR)**

(43) Date de publication de la demande: 21.01.81
**Bulletin 81/3**

(84) Etats contractants désignés: **AT BE DE GB IT NL**

(74) Mandataire: **Tony-Durand, Serge, Cabinet Tony-Durand 22, Boulevard Voltaire, F-75011 Paris (FR)**

(54) **Alimentation secteur à haut rendement pour tubes fluorescents.**

(57) L'invention concerne les convertisseurs statiques du type à auto-oscillateur symétrique, propres à transformer un courant continu à tension élevée en courant alternatif à fréquence et puissance déterminées.

L'auto-oscillateur suivant l'invention comprend deux moyens commutateurs montés en amplificateurs à électrode commune. L'alimentation en courant continu est réalisée à part du courant secteur redressé par un pont de diodes chargeant un condensateur réservoir. L'un des pôles de l'alimentation est connecté à l'auto-oscillateur par l'intermédiaire d'un circuit limiteur de tension qui permet de moduler la puissance appliquée à la charge en fonction de la lumière ambiante. Un circuit de correction de déphasage est intercalé entre le réseau et le redresseur.

Le dispositif est apte à réaliser l'alimentation de tubes fluorescents tout en limitant au minimum la consommation énergétique.

EP 0 022 699 A1

Alimentation secteur à haut rendement pour
tubes fluorescents

La présente invention concerne les convertisseurs
statiques du type à auto-oscillateur symétrique, propres à
transformer un courant continu en courant alternatif dont
la fréquence et la puissance de sortie sont ajustables.

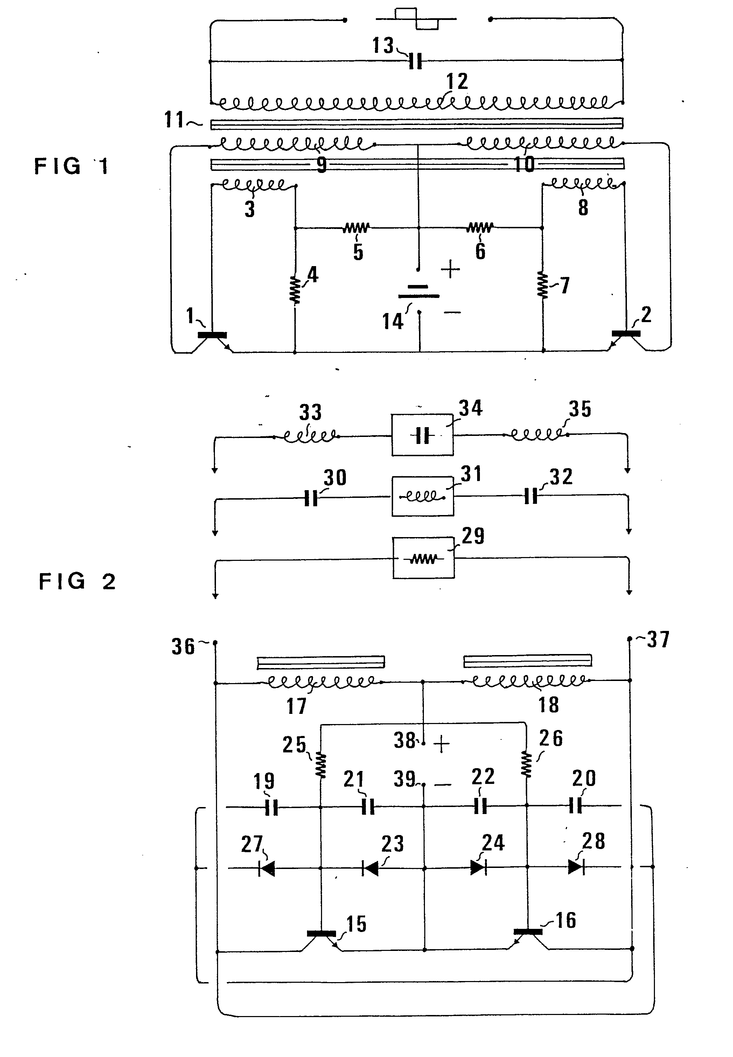

Dans des dispositifs connus de ce genre, tel celui
qui est représenté sur la figure 1, l'auto-oscillateur est
composé de deux transistors de commutation 1 et 2, montés en
amplificateurs à émetteur commun. Le circuit collecteur de
ces transistors est couplé au transformateur 11 par le moyen
des enroulements 9 et 10. Ces deux enroulements, reliés à
l'un des pôles de la source 14, sont parcourus, à tour de
rôle, par un courant de sens opposé. Les enroulements de
réaction 3 et 8, insérés dans le circuit de base desdits
transistors, entretiennent les oscillations. Les résistances
4 et 7 ont pour rôle de limiter le courant de base desdits
transistors. Ces dites résistances, associées, respectivement,
aux résistances 5 et 6, ont pour rôle supplémentaire de réaliser un pont diviseur, propre à polariser convenablement le
circuit base-émetteur des susdits transistors. Le transformateur 11 possède un dernier enroulement 12, lequel, associé
au condensateur 13, constitue un circuit oscillant parallèle
qui régit la fréquence de fonctionnement du susdit dispositif.
Aux bornes de ce circuit oscillant est disponible le courant
alternatif recherché. Un tel convertisseur permet, à partir
d'une batterie d'accumulateurs, de remplir de multiples fonctions : alimentation d'appareils secteur, fourniture d'une
haute tension, fourniture d'un courant à fréquence élevée...

Un tel convertisseur souffre d'inconvénients majeurs;
ces derniers sont décrits ci-après.

Inconvénient technique. En régime de commutation, les
transistors considérés doivent sans entrer en avalanche, supporter des surtensions transitoires qui, au blocage, peuvent
atteindre couramment 5 fois la tension de la source elle-même.
Ainsi, par exemple, si l'on prend comme source le secteur 220 V redressé, l'on dispose d'au moins 300 V continus, partant, de transitoires qui pourraient atteindre 1500 V, ce qui est le Vcbo limite des meilleurs transistors haute tension. Or, par définition, pour tenir le Vcbo, il faut court-circuiter, au blocage, l'espace base-émetteur du transistor considéré. Dans le dispositif décrit ci-dessus, cette possibilité de court-circuit est exclue, car aux transitoires de fréquences élevées, l'impédance des enroulements de base 3 et 8 est élevée, ceci étant aggravé par le fait que s'y ajoute, en plus, l'impédance supplémentaire des résistances 4 et 7. En conséquence, un tel type de montage ne peut permettre, aux transistors utilisés que de supporter des surtensions transitoires très inférieures à leur Vcbo exploitable.

De ce fait, le vaste champ d'application que représente l'utilisation du réseau redressé comme source d'alimentation, se trouve, dans ces conditions, interdit, car la fiabilité à en attendre serait trop réduite.

Inconvénient industriel. La construction du transformateur équipant le susdit dispositif implique des tolérances de fabrication très serrées, car il faut assurer une parfaite symétrie de l'inductance propre, de la résistance série et de la capacité répartie des 4 bobinages. Ceci est doublé du fait qu'un tel transformateur comporte 10 sorties à câbler dans un ordre précis et que cette opération accroît encore la difficulté de sa réalisation industrielle.

Inconvénient fonctionnel. Le signal que génère le susdit dispositif n'est pas parfaitement sinusoïdal, ce qui le rend impropre à alimenter, par exemple, des tubes fluorescents. Dans cette application, en effet, si les alternances opposées ne sont pas strictement égales en énergie, une migration de mercure à l'une des extrémités du tube se produira. Après un certain temps de fonctionnement, ce phénomène se traduit par le noircissement de la susdite extrémité. Ce noircissement ne peut pas se produire dans le cas d'une alimentation directe à partir du réseau 50 ou 60 Hertz, car la sinusoïde en est parfaite, par contre, dans des dispositifs tels que décrits plus haut , de fabrication si soignée soit-elle, les alternances ne sont jamais parfaitement égales en énergie. C'est pourquoi, de tels dispositifs ne se sont jamais imposés dans l'industrie, sinon pour alimenter des appareils de secours.

Le dispositif auto-oscillateur symétrique suivant l'invention pallie ces inconvénients. Il permet de fonctionner sans risques à partir de la tension redressée d'un réseau 220 V et même 380 V; en outre, il autorise un montage industriel automatisable à partir de composants ne présentant que des dispersions standard ; enfin, il fournit, en sortie, un signal rigoureusement sinusoïdal, ce qui ne limite pas son champ d'application.

L'auto-oscillateur suivant l'invention comprend deux moyens commutateurs montés symétriquement, notamment des transistors, dont l'une des électrodes est commune et reliée au pôle convenable d'une source continue. L'électrode de sortie de chacun desdits moyens commutateurs est reliée à l'autre pôle de la source par le moyen d'une impédance de stockage. L'électrode de commande de chacun desdits moyens commutateurs est reliée à l'électrode de sortie du moyen commutateur opposé par une impédance de réaction. Entre chaque électrode commune et chaque électrode de commande, est connectée une impédance d'adaptation. Enfin, une impédance de polarisation est connectée entre chaque électrode de commande et un potentiel proche de celui des électrodes de sortie. L'impédance de stockage est de préférence une inductance, l'impédance de réaction et l'impédance d'adaptation une capacitance, l'impédance de polarisation une résistance. Si les moyens commutateurs ainsi utilisés présentent une opposition de phase entre leur signal d'entrée et de sortie, et que l'entrée de l'un est reliée à la sortie de l'autre, il y a conduction alternée desdits moyens commutateurs. La fréquence du courant périodique ainsi engendré dépend du circuit oscillant constitué, d'une part, par la série ainsi réalisée des inductances, d'autre part, par la série ainsi réalisée des capacités ; l'une et l'autre de ces séries ayant pour point commun l'un des pôles de la source d'alimentation. Ainsi, il est donc possible de prélever directement le
courant alternatif utile entre lesdites électrodes de sortie,
le circuit magnétique des deux inductances pouvant être commun
ou non. Dans le cas où leur circuit magnétique est commun,
on peut prévoir d'y bobiner une troisième inductance aux
bornes de laquelle il sera possible d'appliquer tous types de
charges, résistives ou réactives. Dans le cas général, si une
charge résistive peut être connectée directement entre les
électrodes de sortie sans modifier la fréquence du dispositif,
il n'en sera pas de même si ladite charge comporte un terme
réactif. Ainsi, si cette charge est inductive, on compensera
ses effets par une ou plusieurs capacités montées en série
avec elle. Par contre, si cette charge est capacitive, on
compensera ses effets par une ou plusieurs inductances montées
en série avec elle. La compensation parallèle de la charge est
également possible, mais elle diminue d'autant /l'impédance globale
de ladite charge, et cela n'est pas souhaitable, notamment au
démarrage de l'oscillateur.

Selon une première variante, le dispositif objet de
l'invention est représenté par la figure 2. Nous retrouvons
là les susdits moyens commutateurs, en l'occurence les transistors 15 et 16, les inductances 17 et 18, les capacités d'adaptation 19 et 20, les capacités de réaction 21 et 22 et les
résistances de polarisation 25 et 26. Le fonctionnement de cette
première variante s'établit comme décrit plus haut. On y voit
clairement le circuit oscillant parallèle constitué par la
série des inductances 17 et 18 et par la série des capacitances
19, 20, 21 et 22. On y voit aussi que ces capacités s'y comportent comme un diviseur capacitif propre à adapter l'impédance
base-collecteur des transistors 15 et 16, en relation avec
leurs inductances respectives 17 et 18; tout se passe, en effet,
comme si l'on avait établi une prise de base sur l'une et l'autre
des inductances. Les diodes 23 et 24 ont pour rôle de rétablir
la double circulation du courant au niveau des capacités 21

5 0022699

et 22, car, à ce niveau, l'espace base-émetteur des transistors 13 et 16 comporte une diode. En outre, les diodes 23 et 24 ont pour autre rôle de protéger la base des transistors 15 et 16 de toute tension inverse. Les diodes 27 et 28 sont facultatives, mais elles peuvent, dans certains cas, remplir le même rôle que les précédentes, et protéger de manière efficace lesdits transistors. L'énergie utile est disponible entre les bornes 36 et 37. On peut y appliquer, ou directement la charge résistive 29, ou bien à travers les capacités 30 et 32 la charge inductive 31, ou bien encore à travers les inductances 33 et 35 la charge capacitive 34. Le courant continu de la source est appliqué entre les bornes 38 et 39. Dans ce montage, la tension continue peut pratiquement être aussi élevée que le Vcbo des transistors utilisés... En effet, à la différence des dispositifs connus représentés sur la figure 1, on voit que le dispositif suivant l'invention permet d'établir, au blocage des transistors, un court-circuit quasi parfait entre la base et l'émetteur, car, en fait, pour les transitoires de fréquence élevée, les capacités 21 et 22 présentent une impédance négligeable, inférieure, de beaucoup, à l'impédance d'entrée propre des transistors ; partant, il est possible d'exploiter au mieux les possibilités de tenue en tension des transistors utilisés. D'autre part, comme les inductances 17 et 18 peuvent être bobinées sur des circuits magnétiques indépendants, la fabrication et le montage en sont donc simples. En outre, les composants associés sont des plus courants et peuvent être insérés automatiquement. Les résistances 25 et 26 ont un rôle de polarisation momentané à assurer, car le dispositif selon cette variante de l'invention se comporte comme un oscillateur bloqué, lequel, après démarrage, peut se passer de cette polarisation pour fonctionner. Enfin, le signal disponible entre les bornes de sortie 36 et 37 est parfaitement sinusoïdal.

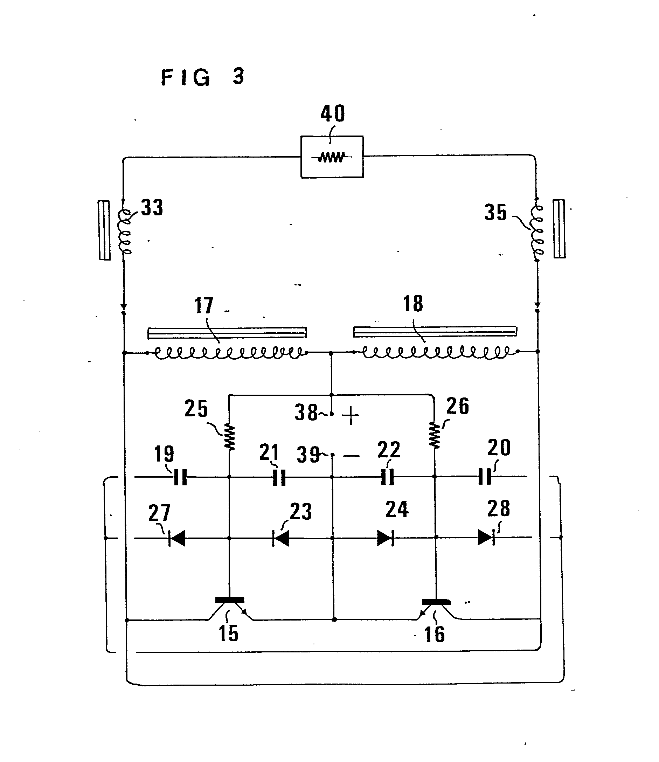

Selon une deuxième variante, représentée sur la figure 3, le dispositif selon l'invention peut paraître identique au précédent ; il en diffère cependant sur le plan fonctionnel. En effet, dans ce cas de figure, la charge 40 peut avantageusement se comporter en résistance négative, et la fréquence de l'oscillateur est alors régie essentiellement par les caractéristiques de cette résistance négative, des inductances série 33 et 35 et des capacités série 19, 20, 21 et 22. Dans ce cas, les inductances 17 et 18 n'interviennent pas dans l'établissement de la fréquence de résonnance, elles se comportent en simples inductances de choc qui isolent le circuit à courant continu du circuit oscillant. Cette variante est particulièrement adaptée à l'alimentation des tubes fluorescents.

L'avantage particulier de cette variante de l'invention est de faire participer la charge, si elle présente des caractéristiques convenables, à la résonnance. Dans ces conditions, le récepteur d'énergie, par exemple un tube fluorescent, n'est plus seulement un accepteur passif, mais un accepteur dynamique inséré dans un circuit qui se conforme parfaitement à ses caractéristiques intrinsèques. Par voie de conséquence, une charge est ainsi couplée optimalement au générateur associé, ce qui permet d'espérer un rendement électrique global très élevé.

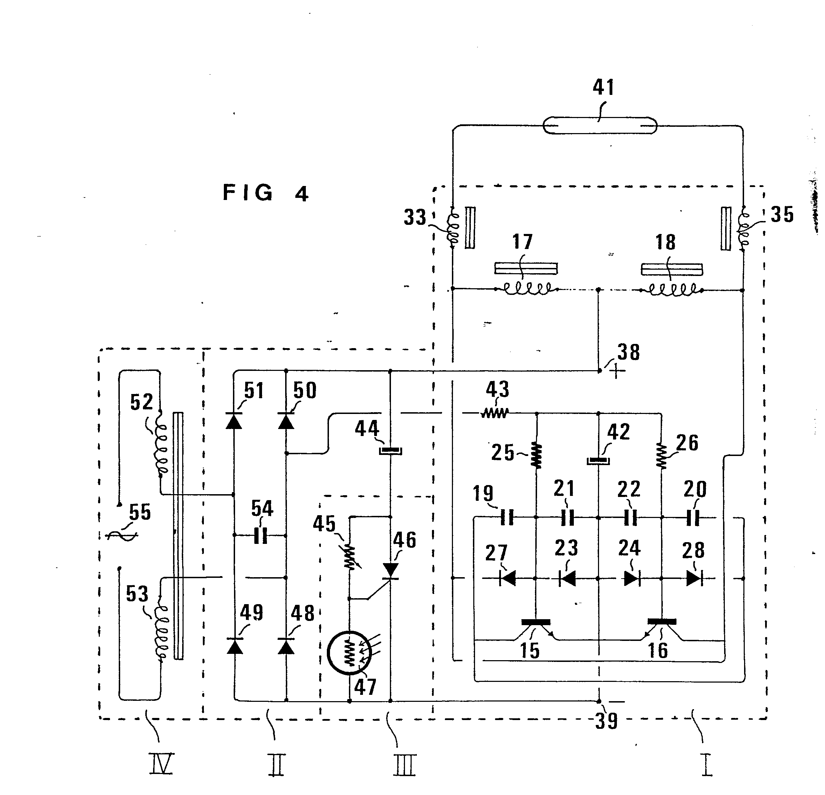

Selon une troisième variante, représentée sur la figure 4, le dispositif conforme à l'invention est utilisé pour résoudre un problème très ardu : alimenter directement à partir du secteur un tube fluorescent, ce avec une fiabilité, un coût de revient et un rendement comparables à un système classique. Les moyens mis en oeuvre pour obtenir ce résultat comprennent 4 sous-ensembles I, II, III et IV. Le circuit convertisseur proprement dit I est conforme aux précédentes variantes du dispositif objet de l'invention. En effet, nous y retrouvons les mêmes composants : les transistors 15 et 16, les diodes 23, 24, 27 et 28, les condensateurs 19, 20, 21 et 22, les inductances 17, 18, 33 et 35, et les résistances 25 et 26. Il faut, en outre, noter la présence du condensateur de filtrage 42 et de la résistance 43 qui lui est associée. Ces composants supplémentaires ont pour rôle de lisser le courant redressé par la diode 48, de telle sorte que la composante alternative du secteur n'ait pas d'effets sensibles sur le courant de polarisation de base des transistors 15 et 16. Le tube fluorescent 41 peut être à cathodes froides, car la tension de sortie développée par le dispositif est largement suffisante pour amorcer un tel tube, sans chauffage ni artifice quelconque de départ.

Les bornes d'alimentation en courant continu 38 et 39 sont connectées au circuit d'alimentation secteur II, lequel comprend un pont redresseur composé des 4 diodes 48, 49, 50 et 51, et un condensateur de filtrage 44.

Comme figuré, le circuit d'alimentation II peut être monté avec un circuit limiteur de tension III. Ce circuit a pour rôle d'atténuer jusqu'à l'extinction la lumière émise par le tube fluorescent 41, ce, en corrélation avec un paramètre quelconque. Ici, le circuit limiteur III asservit la quantité de lumière fournie par le tube 41 à la lumière ambiante moyenne, ce qui a pour conséquence de maintenir sensiblement constante ladite lumière ambiante et surtout de réaliser ainsi une économie d'énergie substantielle par rapport aux dispositifs conventionnels. Ce circuit limiteur comprend un thyristor 46 monté en série avec le condensateur 44. La tension aux bornes dudit condensateur 44 est fonction de l'angle de phase d'ouverture dudit thyristor, par rapport au courant secteur redressé. Cet angle de phase est régi par le pont diviseur de tension qui commande la gâchette du thyristor 46, c'est-à-dire la résistance ajustable 45 et la photorésistance à coefficient négatif 47. Ainsi, plus la lumière ambiante est intense, plus ladite photorésistance 47 prend une valeur basse donc, plus est faible la tension gâchette cathode du thyristor et partant, son angle de conduction. Dans ces conditions, la résistance ajustable 45 permet de préétablir une lumière moyenne ambiante adaptée. L'inconvénient du dispositif qui vient d'être décrit, convertisseur à alimentation secteur, avec ou sans limiteur de tension, est qu'il se trouve affligé d'un facteur de puissance capacitif d'environ 0,6. Si un tel dispositif est utilisé dans une même installation concuremment avec des dispositifs conventionnels non compensés dont le facteur de puissance est inductif et de l'ordre de 0,5, il y a compensation; dans le cas contraire, il y a intérêt à prévoir la compensation. C'est le rôle du circuit de compensation IV, qui comporte les inductances 52 et 53 montées en série et bobinées, de préférence, sur un même circuit magnétique. L'impédance desdites inductances est calculée de telle sorte que le retard qu'elles imposent au courant compense le facteur de puissance capacitif du dispositif objet de l'invention. En outre, ces deux inductances ont un rôle secondaire intéressant, c'est qu'associées au condensateur 54, elles réalisent un filtre qui interdit le rejet sur le réseau des parasites que pourrait générer ledit dispositif.

La fiabilité d'un tel dispositif est très grande, car les transistors utilisés ne dissipent pratiquement pas d'énergie à la commutation ; de plus, ils sont utilisés très en deçà de leurs caractéristiques en tension maximale.

Le rendement en lumens par watt d'un tel dispositif est nettement supérieur à celui des meilleurs dispositifs conventionnels, ce qui représente une économie fort appréciable.

Le coût de revient d'un tel dispositif compensé est sensiblement inférieur à celui d'un dispositif conventionnel compensé. Ceci tient en partie au fait que les inductances requises pour construire un tel dispositif conforme à l'invention, sont simples à réaliser, et permettent un bobinage et un assemblage automatisables.

En outre, un tel dispositif permet de réduire dans la proportion de 1 à 5 le poids du cuivre utilisé, de réduire dans la proportion de 1 à 25 le poids du circuit magnétique, de réduire dans la proportion de 1 à 7 l'encombrement, enfin, de réduire dans la proportion de 1 à 20 le poids par rapport aux dispositifs conventionnels équivalents.

Le dispositif objet de l'invention permet l'amorçage instantané des tubes fluorescents, ce, sans besoin de "starter", ou d'enroulement de préchauffage des cathodes.

Le dispositif objet de l'invention peut être asservi à la lumière ambiante, ce qui est difficile à réaliser à bas prix sur les dispositifs conventionnels. D'autres applications intéressantes du dispositif objet de l'invention peuvent être de fournir, à partir d'une tension continue de faible valeur, une haute tension alternative ou continue, ce, sans recourir à un enroulement spécial bobiné sur un transformateur à circuit magnétique unique. On peut ainsi envisager de fournir à partir du susdit dispositif la haute tension continue nécessaire pour alimenter la décharge capacitive d'un allumage pour moteur à explosion.

Comme il va de soi, et comme il résulte d'ailleurs de ce qui précède, l'invention ne se limite nullement à ceux de ses modes d'application et de réalisation qui ont été plus particulièrement envisagés ; elle embrasse, au contraire, toutes les variantes.

REVENDICATIONS DE BREVET

1. Dispositif convertisseur de courant, à auto-oscillateur symétrique, comprenant deux moyens commutateurs, notamment des transistors, caractérisé par le fait que ces moyens commutateurs possèdent chacun une électrode "commune" reliée à l'un des pôles d'une source à courant continu, une électrode "de sortie" reliée à l'autre pôle de ladite source par une impédance de stockage, une électrode "de commande", d'abord, reliée à l'électrode commune par une impédance d'adaptation, ensuite, reliée à l'électrode de sortie du moyen commutateur opposé par une impédance de réaction, enfin, reliée à un potentiel convenable par une impédance de polarisation, et qu'un courant alternatif peut être prélevé entre lesdites électrodes de sortie, sa fréquence étant régie par les différents termes réactifs entrant en jeu.

2. Dispositif selon la revendication 1, caractérisé par le fait que la susdite impédance de stockage est une inductance, que la susdite impédance d'adaptation est une capacité, que la susdite impédance de polarisation est une résistance et que la susdite impédance de réaction est une capacité.

3. Dispositif selon les revendications 1 et 2, caractérisé par le fait que les susdites inductances sont bobinées sur un circuit magnétique commun sur lequel est bobinée, notamment, une troisième inductance, propre à délivrer, entre ses bornes, le courant alternatif de sortie.

4. Dispositif selon les revendications 1 et 2, caractérisé par le fait que les susdites inductances sont bobinées sur un circuit magnétique indépendant.

5. Dispositif selon les revendications 1 à 4, caractérisé par le fait que se trouve connectée entre lesdites électrodes commune et de commande une diode assurant le passage du courant alternatif.

6. Dispositif selon les revendications 1 à 5, caractérisé par le fait que se trouve connectée une diode de protection entre la susdite électrode de sortie et, soit, la susdite électrode commande, soit, la susdite électrode commune, et soit, l'un des susdits pôles de la source d'alimentation.

7. Dispositif selon les revendications 1 à 6, caractérisé par le fait que la charge à laquelle est appliqué le susdit courant de sortie est connectée aux susdites électrodes de sortie à travers une impédance réactive qui, notamment, soit dédoublée et puisse alors relier symétriquement chacune des électrodes de sortie à l'une des bornes de la charge.

8. Dispositif selon les revendications 1 à 7, caractérisé par le fait que la fréquence du susdit courant alternatif est déterminée essentiellement par les termes réactifs propres à la charge, et que les susdites impédances de stockage se comportent comme un moyen d'isoler le courant continu alternatif.

9. Dispositif selon les revendications 1 à 7, caractérisé par le fait que le susdit courant alternatif est appliqué à un circuit redresseur, notamment un pont de diodes ou un multiplicateur de tension, et que le courant ainsi redressé charge une capacité réservoir.

10. Dispositif selon les revendications 1 à 10, caractérisé par le fait que la susdite source à courant continu est obtenue à partir d'un réseau de distribution grâce à un circuit redresseur chargeant une capacité réservoir, laquelle est connectée entre les susdits pôles d'alimentation en courant continu.

11. Dispositif selon la revendication 10, caractérisé par le fait qu'un circuit limiteur de la susdite tension redressée soit associée au susdit circuit ce circuit limiteur comporte, notamment, un triac ou un thyristor, lequel limite, soit la tension du secteur appliquée au redresseur, soit la tension continue issue de ce redresseur, de telle manière que la puissance moyenne du susdit courant alternatif puisse être modulée par la présence d'un élément sensible à un paramètre quelconque, cet élément sensible agissant sur l'électrode de commande dudit triac ou thyristor et pouvant être, notamment, une photorésistance, propre à asservir le dispositif à un seuil lumineux.

12. Dispositif selon les revendications 9 et 10, caractérisé par le fait que le susdit circuit redresseur est précédé d'une inductance destinée à corriger le déphasage capacitif dont est affecté le dispositif, cette inductance pouvant être, notamment, dédoublée, de telle sorte que chacune des bornes du réseau soit reliée symétriquement à chacune des bornes d'entrée du circuit redresseur.

0022699

FIG 1

FIG 2

FIG 3

FIG 4

| Catégorie | Citation du document avec indication, en cas de besoin, des parties pertinentes | Revendication concernée | CLASSEMENT DE LA DEMANDE (Int. Cl. 3) |
|---|---|---|---|
| | **DOCUMENTS CONSIDERES COMME PERTINENTS** | | |
| | FR - A - 2 388 435 (ABADIE)<br>  * Page 3, lignes 11-35; figure 2 * | 1-4,6 | H 05 B 41/29 |
| | DE - A - 2 335 726 (KODON)<br>  * Page 4, ligne 11 - page 6, ligne 20; figure 1 * | 1 | |
| | FR - A - 2 397 675 (ABADIE)<br>  * Page 3, ligne 24 - page 4, ligne 14; figure 1 * - | 1,11 | **DOMAINES TECHNIQUES RECHERCHES (Int. Cl. 3)**<br><br>H 05 B 41/29<br>        41/30<br>H 02 M  7/537 |

Le présent rapport de recherche a été établi pour toutes les revendications

| Lieu de la recherche | Date d'achevement de la recherche | Examinateur |
|---|---|---|
| La Haye | 27-10-1980 | DUCHEYNE |

OEB Form 1503.1   06.78